# EUROPÄISCHE PATENTANMELDUNG

(11) **EP 1 216 972 A2**
(43) Veröffentlichungstag der Anmeldung: **26.06.2002**
(21) Anmeldenummer: 01130060.5
(22) Anmeldetag: 18.12.2001
(51) Int. Cl.: C04B 7/43, F27B 7/32

(54) **Anlage zur thermischen Behandlung von mehlförmigen Rohmaterialien**

(30) Priorität: 23.12.2000 DE 10064971
(71) Anmelder: KHD Humboldt Wedag AG, 51105 Köln (DE)
(72) Erfinder: Schmitz, Christian, 50171 Kerpen (DE); Hand, Andreas, 50733 Köln (DE)

(57) **Zusammenfassung**

Um für Zementklinkerproduktionslinien einen dem Drehrohrofen (10) vorgeschalteten und mit Zweitfeuerung ausgestatteten Calcinator zu schaffen, in dessen Tertiärluftkanal (16) großstückige Ersatzbrennstoffe wie z. B. ganze Altreifen durch Pyrolyse oder Verbrennung nutzbringend entsorgt werden können, wird erfindungsgemäß vorgeschlagen, unterhalb der Zusammenführung (17) von Drehofenabgaskanal (11) und Tertiärluftkanal (16) quer im Tertiärluftkanal (16) einen Rost (18) zur Aufnahme der großstückigen Ersatzbrennstoffe (19) anzuordnen, die an der einen Seite des Tertiärluftkanals auf den Rost (18) eingeschleust werden, wobei die sich auf dem Rost (18) sammelnden Schwelungs- bzw. Verbrennungsrückstände an der gegenüberliegenden Rostseite über einen nach außen geschlossenen Querkanal (27) in den Drehofenabgaskanal (11) ausgeschleust bzw. abgeworfen werden.

## Beschreibung

Die Erfindung betrifft eine Anlage zur thermischen Behandlung von mehlförmigen Rohmaterialien, insbesondere bei der Herstellung von Zementklinker aus Rohmehl, wobei das Rohmehl in einem Brennprozess durch Vorwärmen, Calcinieren, Sintern und Kühlen thermisch behandelt wird, und der Abgasstrom der Sinterstufe (Drehofen) und ein Abluftstrom (Tertiärluft) der Kühlstufe (Klinkerkühler) in der Weise in der Calcinierstufe zur Calcination des Rohmehls genutzt werden, dass wenigstens im Tertiärluftkanal wenigstens eine Brennstelle zur Verbrennung/Schwelung insbesondere von großstückigen Sekundärbrennstoffen bzw. Ersatzbrennstoffen angeordnet ist, wobei der Tertiärluftkanal und der Drehofenabgaskanal zusammengeführt sind und die darin enthaltene Gas-Feststoff-Suspension in den untersten Zyklon des Zyklonschwebegas-Vorwärmersystems zwecks Abtrennung des calcinierten Rohmehls vom Gasstrom eingeführt wird.

Anlagen der oben beschriebenen Art müssen in der Lage sein, in der dem Drehrohrofen vorgeschalteten, mit Zweitfeuerung ausgestatteten Calcinierstufe ein hochgradig calciniertes Rohmehl vor Einführung in den Drehrohrofen zu erzeugen. Gleichzeitig werden die Erbauer und Betreiber von Zementklinkerproduktionslinien mit immer schärferen Forderungen nach niedrigen Emissionswerten bei Schadstoffen wie NOₓ und CO konfrontiert.

Die Erbauer und Betreiber von Zementklinkerproduktionslinien werden aber auch mit dem Problem konfrontiert, bei den in der Calcinierstufe eingesetzten Brennstoffen einen möglichst hohen Anteil an großstückigen Brennstoffen wie z. B. unzerkleinerte Altreifen und/oder andere großstückige meist reaktionsträge schwer zündbare bzw. schwer brennbare Brennstoffe, insgesamt Sekundärbrennstoffe bzw. Ersatzbrennstoffe genannt, einzusetzen und solche Stoffe auf diese Weise zum Zwecke der Calcination des Zementrohmehls nutzbringend zu entsorgen. Beim Einsatz von z. B. Altreifen zwecks Nutzung von deren Brennenergie gehen die Bemühungen verstärkt dahin, im Prozess auch große Altreifen, speziell Lastkraftwagen-Reifen zu verwenden, ohne diese vorher durch kostenaufwendige Zerkleinerungsarbeit in stückige kleinere Partikel zu zerteilen.

So ist es z. B. aus der EP-A-0 803 693 bei einer Zementklinkerproduktionslinie bekannt, ganze Autoreifen in liegender Position in den Drehofenabgaskanal bzw. in den Einlaufschacht zum Drehofen einzuschieben, wobei die Altreifen im Einlaufschacht vergasen und verbrennen sollen und die Reststoffe in die Drehofeneinlaufkammer nach unten fallen sollen. Bei dieser Lösung besteht ein Nachteil zunächst einmal darin, dass jeweils dann, wenn ein Reifen in den Einlaufschacht geschoben wird, eine erhebliche Querschnittsverengung des Schachts stattfindet, die zu einer Druckverlusterhöhung sowie zu einem instabilen Betrieb der Anlage führt. Darüber hinaus stört ein in den Einlaufschacht eingebauter Tisch zur Lagerung der eingeschobenen Altreifen den normalen Prozess ganz erheblich wegen der Gefahr der Ansatzbildungen. Außerdem entsteht beim Einschieben eines Altreifens plötzlich eine konzentrierte Energiezufuhr im Einlaufschacht bzw. im Drehofeneinlaufbereich. Für den unmittelbar danach einsetzenden Pyrolyse-, Vergasungs- und Verbrennungsprozess ist dann meist nicht mehr genügend Sauerstoff vorhanden, so dass es im Drehofenabgas zu unerwünschten CO-Stößen bzw. CO-Spitzen kommt, die dann zum Abschalten der nachgeschalteten elektrostatischen Staubabscheider (Elektrofilter) führen können, falls die CO-Spitzen einen bestimmten Grenzwert überschreiten. Die plötzliche Energiedarbietung im Prozess ist in der Regel unerwünscht, weil nicht die notwendigen Rohmaterialmassenströme spontan zur Verfügung stehen, um die Wärme in Calcinationsarbeit umzuwandeln.

Beim Einsatz von Altreifen im Zementklinkerherstellungsprozess ist es auch bekannt (EP-A-0 764 614), die Altreifen sowie andere Abfallstoffe in einem schachtförmigen Vergasungsreaktor mittels eines Teilstroms der vom Klinkerkühler kommenden Tertiärluft als Vergasungsmittel zu vergasen, das erzeugte Schwelgas bzw. Brenngas im Calcinator zu nutzen und den den Vergasungsreaktor nach unten verlassenden festen Rückstand der geschwelten Abfallstoffe in die Einlaufkammer des Drehrohrofens abzustoßen. Durch die unmittelbare Einführung des Pyrolysegases aus dem Schachtvergaser in den Calcinator wird der eigentliche Calcinierprozess, der bei diesem bekannten System nur in der Drehofenabgassteigleitung erfolgt, vom Vergasung- oder Pyrolyseprozess, der starken Schwankungen unterliegen kann, beeinflusst. Es befinden sich immer große Mengen an Sekundärbrennstoffen im Schachtvergaser. Dies macht eine besondere Sicherheitseinrichtung erforderlich, um das Pyrolysegas im Falle einer Störung der Gesamtanlage über Dach nach den entsprechenden Sicherheitsbestimmungen abfackeln zu können.

Der Oberbegriff des Anspruchs 1 geht aus von der DE-A- 199 20 143, in der vorgeschlagen worden ist, bei einer Zementklinkerproduktionslinie mit einer Calcinierstufe, bei welcher der Drehofenabgaskanal und der Tertiärluftkanal mit mehr oder weniger spitzem Winkel zusammengeführt sind, im Zwickelbereich quer im Tertiärluftkanal schräg liegend einen Rost zur Aufnahme der zu pyrolysierenden Abfallstoffe wie z. B. Altreifen anzuordnen und den Pyrolyserückstand bzw. die nicht verbrannten Reststoffe vom Rost in den Drehofenabgaskanal abzuwerfen und die bei der Pyrolyse entstehende CO-haltige Wolke im Drehofenabgaskanal zur Minderung der NOₓ-Abgasemissionen auszunutzen. Bei diesem System stört der Prozess des Pyrolysierens bzw. Verbrennens der Abfallstoffe wie z. B. Altreifen den Calcinationsprozess nicht, wobei gleichzeitig ein Abgas mit niedrigen NOₓ-Emissionen erhalten wird. Allerdings wird der Tertiärluftkanal selbst, der den Pyrolyse- bzw. Verbrennungs-Rost für die großstückigen Abfallstoffe mit einem zu regulierenden Tertiärluftmengenstrom versorgt, mangels Möglichkeit einer Rohmehleinführung nicht unmittelbar zur Calcinierung eines Rohmehlteilstroms genutzt.

Der Erfindung liegt die Aufgabe zugrunde, die den Oberbegriff des Anspruchs 1 bildende Zementklinkerproduktionslinie, in deren Calcinierstufe großstückige Ersatzbrennstoffe wie z. B. Altreifen durch Pyrolyse oder Verbrennung nutzbringend entsorgt werden, weiter zu verbessern hinsichtlich der Möglichkeit der Nutzung des den Schwel-bzw. Verbrennungsrost mit Luft versorgenden Tertiärluftkanals zur hochgradigen Calcination wenigstens eines Rohmehlteilstroms bei möglichst geringem Druckverlust und bei sicherem Betrieb des Einschleusens der Ersatzbrennstoffe und des Ausschleusens des nicht verbrannten Rückstands.

Diese Aufgabe wird erfindungsgemäß mit einer Anlage mit den Merkmalen des Kennzeichnungsteils des Anspruchs 1 gelöst. Vorteilhafte Ausgestaltungen der Erfindung sind in den Unteransprüchen angegeben.

Charakteristisch für die erfindungsgemäße Calcinierstufe einer Zementklinkerproduktionslinie ist, dass nicht an der Stelle der Zusammenführung von Drehofenabgaskanal und Tertiärluftkanal, sondern deutlich unterhalb dieser Stelle quer im Tertiärluftkanal, der mit wenigstens einem Teilstrom der vom Klinkerkühler kommenden Tertiärluft versorgt wird, ein Rost zur Aufnahme der großstückigen Ersatzbrennstoffe angeordnet ist. Die über eine Schleusenkammer auf den Rost eingeschleusten großstückigen Ersatzbrennstoffe wie z. B. komplette Altreifen werden dann je nach angebotener Menge an Tertiärluft pyrolysiert oder verbrannt. Im Bereich des Rostes verlaufen der Drehofenabgaskanal und der Tertiärluftkanal etwa parallel zueinander. Außerhalb des Tertiärluftkanals ist an seiner dem Drehofenabgaskanal abgewandten Seite die Vorrichtung zur Einschleusung der großstückigen Ersatzbrennstoffe zum Rost angeordnet. Zur Überbrückung der Distanz zwischen dem Drehofenabgaskanal und dem Tertiärluftkanal sind beide Kanäle in Höhe des Rostes über einen Querkanal miteinander verbunden, über den die Ausschleusung des Verbrennungs- bzw. Schwelungs-Rückstandes aus dem Tertiärluftkanal und die Einschleusung bzw. der Abwurf in den Drehofenabgaskanal erfolgt.

Weil bei der erfindungsgemäßen Calcinierstufe der im Tertiärluftkanal angeordnete Rost zur thermischen Behandlung der großstückigen Ersatzbrennstoffe an einer vergleichsweise tief liegenden Stelle angeordnet ist, wird die Möglichkeit geschaffen, oberhalb des Rostes in den Tertiärluftkanal wenigstens einen im vorgeschalteten Rohmehlvorwärmer vorgewärmten Rohmehlteilstrom einzuführen, der dann auf seinem Flugweg nach oben in der Calcinierstufe noch eine genügend lange Verweilzeit erfährt, um mit der insbesondere beim Verbrennen der großstückigen Ersatzbrennstoffe frei werdenden Wärmeenergie hochgradig calciniert zu werden.

Gemäß einem weiteren Merkmal der Erfindung weist die Vorrichtung zur Einschleusung der großstückigen Ersatzbrennstoffe eine in Höhe des Rostes an den Tertiärluftkanal angesetzte Schleusenkammer auf, die mit der Unterseite eines die gestapelten großstückigen Ersatzbrennstoffe bevorratenden Schachtes in Verbindung steht, wobei am Übergang zwischen Vorratsschacht und Schleusenkammer eine etwa in horizontaler Ebene verschiebbare Schleusenwand und am Übergang zwischen Schleusenkammer und Rost des Tertiärluftkanals eine etwa in vertikaler Ebene verschiebbare Schleusenwand angeordnet ist. Bei dieser Art der in der Figurenbeschreibung noch näher beschriebenen Einschleusung der großstückigen Brennstoffe zum Rost des Sekundärluftkanals wird ein nicht erwünschter Falschlufteintritt vermieden.

Nach einem weiteren Merkmal der Erfindung weist die Schleusenkammer eine Stoßeinrichtung wie z. B. einen hydraulisch betätigten Schieber zum translatorischen Transport der großstückigen Brennstoffe in Richtung des Rostes auf, wobei diese Stoßeinrichtung ebenfalls wie weiter unten näher beschrieben in der Lage ist, aus dem Vorratsschacht die stückigen Brennstoffe nacheinander auf den Rost des Tertiärluftkanals zu schleusen und gleichzeitig die Verbrennungsrückstände des Rostes über den Querkanal in den Drehofenabgaskanal auszuschleusen.

Die Erfindung und deren weitere Merkmale und Vorteile werden anhand des in den Figuren schematisch dargestellten Ausführungsbeispieles näher erläutert.

Es zeigen:
- Fig. 1:: in schematischer Darstellung ausschnittsweise in Seitenansicht die Calcinierstufe bzw. den Calcinator einer Anlage zur Herstellung von Zementklinker aus Zementrohmehl,
- Fig. 2:: aus Figur 1 als Einzelheit vergrößert herausgezeichnet den im Tertiärluftkanal des Calcinators eingebauten Rost zur Verbrennung bzw. Schwelung großstückiger Ersatzbrennstoffe am Beispiel von zu entsorgender Altreifen mit zugehöriger Vorrichtung zur Einschleusung der Ersatzbrennstoffe und Ausschleusung der Rückstände, und
- Fig. 3:: schematisch im Horizontalschnitt die Draufsicht auf den im Tertiärluftkanal angeordneten Rost der Fig. 1 und 2.

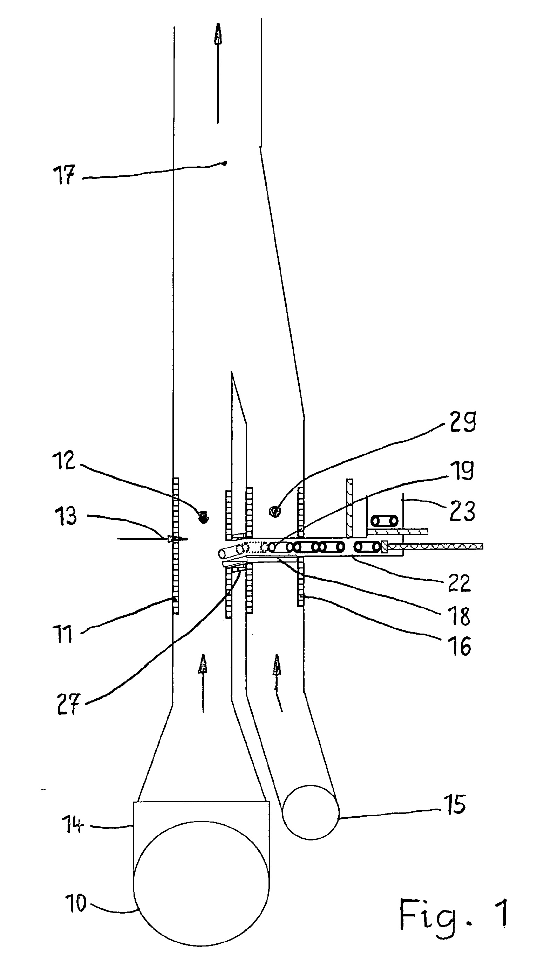

Der in Figur 1 schematisch dargestellte untere Bereich einer Zementklinkerproduktionslinie mit Vorcalcinator weist einen Drehrohrofen 10 auf mit einem Drehofenabgaskanal 11, der nach oben zum untersten Zyklon eines nicht dargestellten Zyklonschwebegas-Vorwärmersystems zur Vorerhitzung des Zementrohmehls führt. Das im vorletzten (zweituntersten) Zyklon aus dem Abgasstrom ausgeschiedene vorerhitzte Rohmehl wird geteilt und ein Rohmehlteilstrom gelangt über einen Rohmehleintrag 12 in den Drehofenabgaskanal 11. Der Rohmehleintrag 12 kann mit wenigstens einer eigenen Brennstelle 13 versehen sein, in welchem Brennstoff vorzugsweise flammenlos mit Sauerstoffüberschuss oder mit Sauerstoffunterschuss verbrannt wird. Bei unterstöchiometrischer Brennstoffverbrennung kann im Drehofenabgaskanal eine sich von der Brennstelle 13 nach oben erstreckende CO-haltige Wolke erzeugt werden, die wirkungsvoll NOₓ-Verbindungen, die aus dem Drehofen 10 kommen, reduziert und die verhindert, das solche NOₓ-Verbindungen in die oberen Bereiche des erfindungsgemäßen Calciniersystems gelangen und emittiert werden können. Der Drehofen 10 kann im Bereich seiner Einlaufkammer 14 mit einem Teilgasabzug bzw. Bypassabzug ausgestattet sein.

Der im Drehrohrofen aus dem calcinierten Zementrohmehl erzeugte Zementklinker wird in einem Klinkerkühler 15 gekühlt. Ein Teil der vom Klinkerkühler 15 abgezogenen Kühlerabluft wird als Tertiärluft über einen Tertiärluftkanal 16 zum Calcinator herangeführt. Beide Kanäle 11 und 16 sind mit geringem Abstand voneinander etwa parallel zueinander verlaufend von unten nach oben geführt und weiter oben im Bereich 17 zusammengeführt.

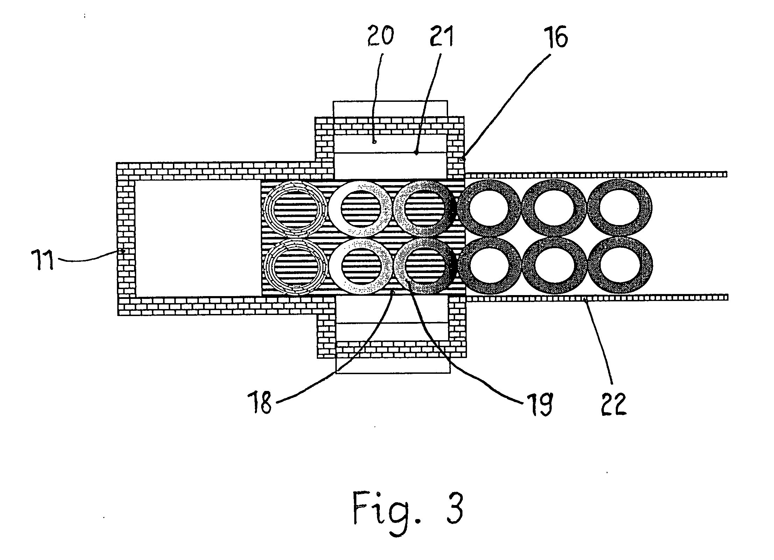

Deutlich unterhalb der Zusammenführung 17 von Drehofenabgaskanal 11 und Tertiärluftkanal 16 ist quer im Tertiärluftkanal 16 ein Rost 18 zur Aufnahme der großstückigen Ersatzbrennstoffe angeordnet, im Ausführungsbeispiel liegend angeordnete zu entsorgende Altreifen 19, die gemäß Draufsicht der Figur 3 auch in mehreren nebeneinander angeordneten Reihen, z. B. zwei Reihen dem Rost 18 zugeführt werden können, der mit Vorteil aus mit Abstand voneinander angeordneten und sich in Rostförderrichtung von rechts nach links erstreckenden Roststäben zusammengesetzt ist. Wie ebenfalls gemäß Ausführungsbeispiel der Figur 3 ersichtlich, füllt der Rost 18 mit Vorteil nicht den gesamten freien Querschnitt des Tertiärluftkanals 16 aus, sondern es verbleibt in Rostförderrichtung gesehen an beiden Seiten des Rostes 18 im Tertiärluftkanal 16 jeweils ein freier Kanalquerschnitt 20, in welchem jeweils ein Regelorgan 21 wie Regelklappe zur Steuerung des Volumenstroms der Tertiärluft im Tertiärluftkanal 16 angeordnet ist.

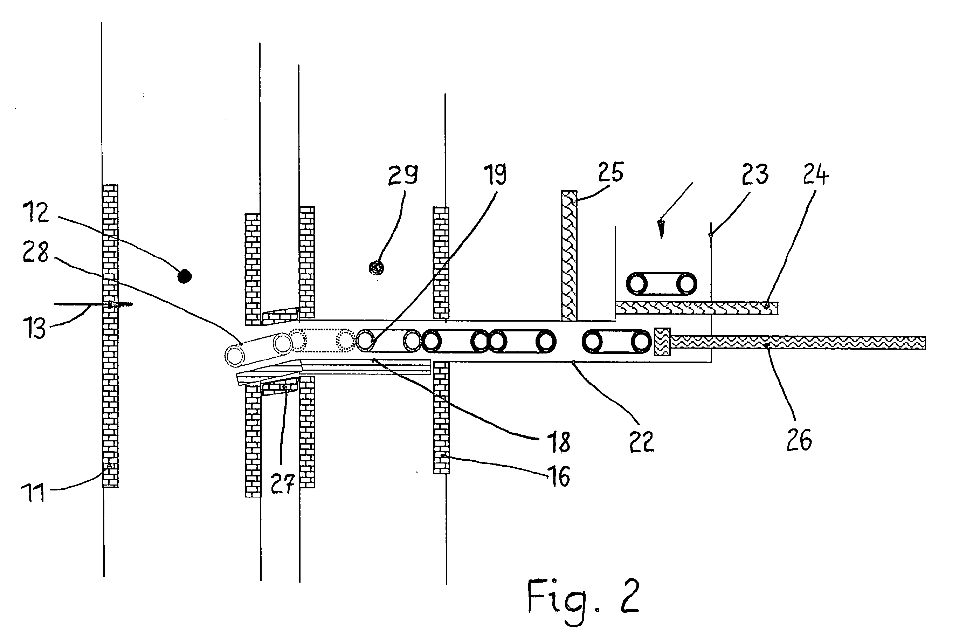

Die in Figur 2 im Detail dargestellte Vorrichtung zur Einschleusung der großstückigen Ersatzbrennstoffe 19 wie unzerkleinerte Altreifen funktioniert wie folgt:

Außerhalb des Tertiärluftkanals 16 ist an seiner dem Drehofenabgaskanal 11 abgewandten Seite in Höhe des Rostes 18 eine Schleusenkammer 22 angesetzt, die mit der Unterseite eines Vorratsschachtes 23 in Verbindung steht, der von oben über ein Förderband mit Altreifen befüllt wird, die sich im Schacht liegend übereinander stapeln. Je nach Größe der Altreifen können im Schacht 23 auch zwei oder mehr Reifenstapel nebeneinander aufgebaut werden. Am Übergang zwischen Vorratsschacht 23 und Schleusenkammer 22 ist eine etwa in horizontaler Ebene verschiebbar Schleusenwand 24 und am Übergang zwischen Schleusenkammer und Rost 18 des Tertiärluftkanals 16 ist eine etwa in vertikaler Ebene verschiebbare Schleusenwand 25 angeordnet. Zum Transport der großstückigen Ersatzbrennstoffe 19 in Richtung zum Rost 18 weist die Schleusenkammer 22 eine Stoßeinrichtung 26 in Gestalt eines z. B. über Hydraulikzylinder betätigten Schiebers auf.

Gemäß Ausführungsbeispiel der Figur 2 ist die vertikale Schleusenwand 25 gerade geöffnet und die horizontale Schleusenwand 24 geschlossen; die Stoßeinrichtung 26 bewegt sich verhältnismäßig langsam nach links und sie schiebt die jeweils vorderste Reihe der in der Schleusenkammer hintereinander angeordneten Altreifen auf den Rost 18. Dann wird die Stoßeinrichtung 26 schnell zurückgefahren, die vertikale Schleusenwand 25 in ihre Schließposition nach unten gefahren und die horizontale Schleusenwand 24 durch Bewegung nach rechts geöffnet, so dass der im Schacht 23 befindliche Reifenstapel um eine Stapelschicht nach unten rutscht, wonach die Schleusenwand 24 wieder geschlossen und die Schleusenwand 25 wieder geöffnet wird. Auf diese Weise kann der Rost 18 des Tertiärluftkanals 16 quasikontinuierlich mit den zu entsorgenden Altreifen beschickt werden, ohne dass Falschluft in den Tertiärluftkanal gelangt.

Je nach Menge des vermittels der Regelorgane 21 im Tertiärluftkanal 16 einstellbaren Volumenstroms der Tertiärluft werden die auf dem Rost 18 befindlichen Altreifen 19 geschwelt bzw. pyrolysiert bzw. bei Sauerstoffüberschuss verbrannt. Zur Überbrückung der Distanz zwischen dem Drehofenabgaskanal 11 und dem Tertiärluftkanal 16 stehen beide Kanäle in Höhe des Rostes 18 über einen nach außen geschlossenen Querkanal 27 miteinander in Verbindung, der nach Figur 2 vom Tertiärluftkanal 16 zum Drehofenabgaskanal 11 ein leichtes Gefälle aufweist. Über diesen Querkanal 27 werden die auf dem Rost 18 sich sammelnden Schwelungs- bzw. Verbrennungsrückstände 28 wie insbesondere das metallische Karkassenmaterial der Altreifen aus dem Tertiärluftkanal ausgeschleust und in den Drehofenabgaskanal 11 eingeschleust, d. h. in die Drehofeneinlaufkammer 14 abgeworfen. Diese Ausschleusung der Rückstände geschieht automatisch immer dann, wenn eine neue Reihe von Altreifen auf den Rost 18 vorgeschoben wird.

Die bei der Behandlung der Altreifen 19 auf dem Rost 18 frei werdende Wärmeenergie wird unmittelbar zur Rohmehlcalcinierung in der Weise genutzt, dass nach einem besonderen Merkmal der Erfindung im Tertiärluftkanal 16 oberhalb des Rostes 18 wenigstens ein Rohmehleintrag 29 angeordnet ist, über den wenigstens ein Teilstrom des im Zyklonschwebegasvorwärmersystems vorerhitzten Rohmehls in den Calcinator eingeführt wird, um dort hochgradig calciniert zu werden.

Strömungsabwärts von der Zusammenführung 17 von Drehofenabgaskanal 11 und Tertiärluftkanal 16 mündet in den dann vereinigten Kanal mit Vorteil ein Tertiärluftteilstrom ein, der über wenigstens eine in der Zeichnung nicht dargestellte Zweigleitung von der vom Klinkerkühler 15 kommenden Tertiärluftleitung abgezweigt ist. Dieser zusätzlich einmündende Tertiärluftteilstrom dient zur Sicherung des möglichst vollständigen Restausbrandes des im Drehofenabgaskanal 11 sowie im Tertiärluftkanal 16 ggf. nicht vollständig umgesetzten CO sowie ggf. noch anderer vorhandener brennbarer Abgasbestandteile, wobei mit diesem Restausbrand eine Restcalcinierung des im vereinigten Suspensionsströmungskanal geförderten Rohmehls verbunden ist.

Die zu entsorgenden großstückigen Ersatzbrennstoffe 19 können nicht nur komplette Altreifen sein, sondern auch Pakete brennbarer Abfallstoffe, z. B. Pakete gepresster aus der Müllsortierung stammender Kunststoffverpackungen, Kunststofffolien etc..

## Patentansprüche

1. Anlage zur thermischen Behandlung von mehlförmigen Rohmaterialien, insbesondere bei der Herstellung von Zementklinker aus Rohmehl, wobei das Rohmehl in einem Brennprozess durch Vorwärmen, Calcinieren, Sintern und Kühlen thermisch behandelt wird, und der Abgasstrom der Sinterstufe (10) (Drehofen) und ein Abluftstrom (Tertiärluft) der Kühlstufe (15) (Klinkerkühler) in der Weise in der Calcinierstufe zur Calcination des Rohmehls genutzt werden, dass wenigstens im Tertiärluftkanal (16) wenigstens eine Brennstelle zur Verbrennung/Schwelung insbesondere von großstückigen Sekundärbrennstoffen bzw. Ersatzbrennstoffen (19) angeordnet ist, wobei der Tertiärluftkanal (16) und der Drehofenabgaskanal (11) zusammengeführt sind und die darin enthaltene Gas-Feststoff-Suspension in den untersten Zyklon des Zyklonschwebegas-Vorwärmersystems zwecks Abtrennung des calcinierten Rohmehls vom Gasstrom eingeführt wird,
**gekennzeichnet durch** folgende Merkmale:
a) unterhalb der Zusammenführung (17) von Drehofenabgaskanal (11) und Tertiärluftkanal (16) ist quer im Tertiärluftkanal (16) ein Rost (18) zur Aufnahme der großstückigen Ersatzbrennstoffe (19) angeordnet,
b) außerhalb des Tertiärluftkanals (16) ist an seiner dem Drehofenabgaskanal (11) abgewandten Seite eine Vorrichtung (22) zur Einschleusung der großstückigen Ersatzbrennstoffe zum Rost (18) angeordnet,
c) zur Überbrückung der Distanz zwischen dem Drehofenabgaskanal (11) und dem Tertiärluftkanal (16) stehen beide Kanäle in Höhe des Rostes (18) über einen Querkanal (27) miteinander in Verbindung zur Ausschleusung des Verbrennungs- bzw. Schwelungs-Rückstandes (28) aus dem Tertiärluftkanal und Einschleusung bzw. Abwurf in den Drehofenabgaskanal.

2. Anlage nach Anspruch 1,
**dadurch gekennzeichnet, dass** die Vorrichtung zur Einschleusung der großstückigen Ersatzbrennstoffe eine in Höhe des Rostes (18) an den Tertiärluftkanal (16) angesetzte Schleusenkammer (22) aufweist, die mit der Unterseite eines die gestapelten großstückigen Sekundärbrennstoffe bevorratenden Schachtes (23) in Verbindung steht, wobei am Übergang zwischen Vorratsschacht (23) und Schleusenkammer (22) eine etwa in horizontaler Ebene verschiebbare Schleusenwand (24) und am Übergang zwischen Schleusenkammer und Rost (18) des Tertiärluftkanals (16) eine etwa in vertikaler Ebene verschiebbare Schleusenwand (25) angeordnet ist.

3. Anlage nach Anspruch 2,
**dadurch gekennzeichnet, dass** die Schleusenkammer (22) eine Stoßeinrichtung (26) zum translatorischen Transport der großstückigen Ersatzbrennstoffe (19) in Richtung zum Rost (18) aufweist.

4. Anlage nach Anspruch 1,
**dadurch gekennzeichnet, dass** der im Tertiärluftkanal (16) installierte Rost (18) aus mit Abstand voneinander angeordneten und sich in Rostförderrichtung erstreckenden Roststäben zusammengesetzt ist.

5. Anlage nach Anspruch 1 oder 4,
**dadurch gekennzeichnet, dass** in Rostförderrichtung gesehen an beiden Seiten des Rostes (18) im Tertiärluftkanal (16) ein freier Kanalquerschnitt (20) verbleibt, in welchem jeweils ein Regelorgan (21) wie Regelklappe zur Steuerung des Volumenstroms der Tertiärluft im Tertiärluftkanal (16) angeordnet ist.

6. Anlage nach einem der Ansprüche 1 bis 5,
**dadurch gekennzeichnet, dass** im Tertiärluftkanal (16) oberhalb des Rostes (18) wenigstens ein Rohmehleintrag (29) angeordnet ist.

7. Anlage nach einem der Ansprüche 1 bis 6,
**dadurch gekennzeichnet, dass** oberhalb und/oder unterhalb der Einmündung des Querkanals (27) in den Drehofenabgaskanal (11) in letzterem wenigstens eine Brennstelle (13) und wenigstens ein Rohmehleintrag (12) angeordnet ist.

8. Anlage nach einem der Ansprüche 1 bis 7,
**dadurch gekennzeichnet, dass** strömungsabwärts von der Zusammenführung (17) von Drehofenabgaskanal (11) und Tertiärluftkanal (16) in den dann vereinigten Kanal ein Tertiärluftteilstrom einmündet, der über wenigstens eine Zweigleitung von der vom Klinkerkühler (15) kommenden Tertiärluftleitung abgezweigt ist.
